# EUROPÄISCHE PATENTSCHRIFT

(11) **EP 1 719 585 B1**
(45) Veröffentlichungstag und Bekanntmachung des Hinweises auf die Patenterteilung: **06.04.2011**
(21) Anmeldenummer: 06006637.0
(22) Anmeldetag: 30.03.2006
(51) Int. Cl.: B24B 13/06, B24B 41/00, B24B 47/22, B24B 47/20, B24B 13/04, B23Q 1/60

(54) **Maschine zur Bearbeitung von optischen Werkstücken, namentlich Kunststoff-Brillengläsern**
Machine for machining optical workpieces, by name plastic spectacle lenses
Machine destinée au traitement de pièces optiques, nominalement de verres de lunettes en plastique

(30) Priorität: 06.05.2005 DE 102005021640
(43) Veröffentlichungstag der Anmeldung: 08.11.2006
(73) Patentinhaber: Satisloh GmbH, 35578 Wetzlar (DE)
(72) Erfinder: Savoie, Marc, 35578 Wetzlar (DE); McPherson, Edward, 35614 Asslar (DE)
(74) Vertreter: Oppermann, Mark

(56) Entgegenhaltungen:
- EP-A- 0 213 361
- WO-A-02/06005
- DE-A1- 3 600 231

## Beschreibung

### TECHNISCHES GEBIET

Die vorliegende Erfindung bezieht sich auf eine Maschine zur Bearbeitung von optischen Werkstücken, namentlich Kunststoff-Brillengläsern, gemäß dem Oberbegriff des Patentanspruchs 1. Solch eine Maschine wird in der OS WO 02/06005 veröffentlicht.

### STAND DER TECHNIK

Üblicherweise liegt bei der Bearbeitung von Kunststoff-Brillengläsern ein aus Kunststoff spritzgegossener Brillenglasrohling, auch "Blank" genannt, vor, der eine standardisierte endbearbeitete konvexe Außenfläche mit z.B. sphärischer oder progressiver Form aufweist. Die in der Regel konkaven Innen- bzw. Rezeptflächen erhalten mittels spanender Bearbeitung eine sphärische, asphärische, torische, atorische, progressive oder Freiformgeometrie (Gleitsichtflächen), je nach der gewünschten optischen Wirkung. Der typische konventionelle Ablauf bei der Innenflächenbearbeitung sieht nach dem Aufblocken des Brillenglasrohlings mit seiner Außenfläche auf einem Blockstück einen Fräs- oder Drehbearbeitungsprozeß zur Herstellung der optisch aktiven Form vor, in der Regel gefolgt von einem Feinschleif- oder Polierprozeß zur Erzielung der notwendigen Oberflächengüte.

Für den oben erwähnten Drehbearbeitungsprozeß werden im Stand der Technik auch sogenannte Fast-Tool-Drehmaschinen eingesetzt, bei denen ein Drehmeißel entweder linear reziprozierend (siehe z.B. die gattungsbildende WO 02/06005 A1) oder rotativ (vergl. beispielsweise die WO 99/33611 A1) hochdynamisch bewegt werden kann, so daß nicht-rotationssymmetrische Linsenflächen im Drehverfahren erzeugt werden können. Dabei muß der Drehmeißel, insbesondere bei der Erzeugung hochgenauer optischer Flächen, mit dem Arbeitspunkt seiner Schneidkante hochgenau auf die Rotationsachse der Werkstückspindel ausgerichtet werden, damit im Zentrum der bearbeiteten Linsenfläche keine vorstehende nichtbearbeitete Zone verbleibt. Nach dem Stand der Technik ist daher für den Drehmeißel eine sehr genaue Höheneinstellbarkeit mittels spezieller Stellachsen erforderlich.

Hierfür werden häufig Festkörpergelenke benutzt, welche den Drehmeißel oder auch die vollständige Fast-Tool-Einheit tragen können. Durch manuelle Verstellung einer Feingewindeschraube wird dabei das gesamte Festkörpergelenk auf der gegenüberliegenden Seite des Drehmeißels deformiert, wodurch es zu einer sehr feinfühligen Höhenverlagerung der Schneidkante des Drehmeißels kommt. Eine Abbildung eines solchen Stellmechanismus und eine Beschreibung seiner Funktion ist beispielsweise aus dem Maschinenhandbuch *"Precitech Nanoform^{®} 200* / *Nanoform^{®} 350"* der Precitech Inc., Keene, New Hampshire, USA, Seiten 14 und 15, ersichtlich.

Darüber hinaus sind Werkzeughalter und Revolverköpfe handelsüblich, die über entsprechende Höhenjustagemöglichkeiten für Drehmeißel verfügen. Insbesondere sind austauschbare Werkzeughalter bekannt, die entsprechende mechanische Höheneinstellungsmechanismen besitzen (siehe z.B. die Druckschriften US 5,245,896 und DE 42 27 268 A1).

Die Höhenausrichtung wird üblicherweise in Werkzeugvoreinstellgeräten außerhalb der Maschine vorgenommen, wobei der gesamte Drehmeißelhalter in einer Vorrichtung mittels eines Kreuztisches an ein Justierstück, welches die Lage der Hauptspindeldrehachse repräsentiert, herangefahren wird. Mittels eines Profilprojektors wird die Höhe und Lage der Drehmeißelschneide erfaßt und zu dem Justierstück in Relation gebracht.

Die bekannten Mechanismen verwenden jedoch sämtlich eine manuelle Einstellung. Um eine automatische Verstellung auch während des Betriebs der Bearbeitungsmaschine zu ermöglichen, müßte eine zugeordnete CNC-gesteuerte Stellachse vorgesehen werden, was einen erheblichen Aufwand mit sich bringen würde.

Ausgehend vom Stand der Technik nach der WO 02/06005 A1 liegt der Erfindung die Aufgabe zugrunde, eine Maschine zur Bearbeitung von optischen Werkstücken, namentlich Kunststoff-Brillengläsern mit einer Fast-Tool-Anordnung bereitzustellen, bei welcher der Arbeitspunkt der Schneidkante des Drehmeißels auf möglichst einfache Weise hochgenau auf die Rotationsachse der Werkstückspindel ausgerichtet werden kann.

Diese Aufgabe wird durch die im Patentanspruch 1 angegebenen Merkmale gelöst. Vorteilhafte und/oder zweckmäßige Weiterbildungen der Erfindung sind Gegenstand der Patentansprüche 2 bis 5.

### DARSTELLUNG DER ERFINDUNG

Erfindungsgemäß ist bei einer Maschine zur Bearbeitung von optischen Werkstücken, namentlich Kunststoff-Brillengläsern, die an einer Rezeptfläche zu bearbeiten sind, welche Maschine eine Werkstückspindel, mittels der das Werkstück um eine Werkstück-Drehachse B drehend antreibbar ist, die durch die Rezeptfläche verläuft, und eine Fast-Tool-Anordnung aufweist, mittels der ein Drehmeißel in beiden Richtungen einer Fast-Tool-Achse F1 auf die Rezeptfläche zu und von dieser weg lagegeregelt bewegbar ist, um den Drehmeißel bei der Bearbeitung der Rezeptfläche zuzustellen, wobei die Werkstückspindel und die Fast-Tool-Anordnung zudem in einer weiteren Richtung x, die quer zur Fast-Tool-Achse F1 verläuft, relativ zueinander bewegbar sind, um bei der Bearbeitung der Rezeptfläche zwischen dem Werkstück und dem Drehmeißel einen Vorschub zu erzeugen; die Werkstückspindel in beiden Richtungen einer Linearachse Y, die mit der Werkstück-Drehachse B ausgefluchtet ist, auf den Drehmeißel zu und von diesem weg lagegeregelt zustellbar, wobei die weitere Richtung x und die Fast-Tool-Achse F1 eine Fast-Tool-Bewegungsebene X-F1 bilden, während die weitere Richtung x und die Linearachse Y eine zweite Ebene X-Y bilden, die die Werkstück-Drehachse B enthält, und wobei die Fast-Tool-Bewegungsebene X-F1 bezüglich der zweiten Ebene X-Y um einen Anstellwinkel α schräggestellt ist.

Durch die erfindungsgemäße Schrägstellung der Bewegungsebene des Fast-Tools derart, daß zwischen dieser Bewegungsebene und der die Werkstück-Drehachse enthaltenden zweiten Ebene, mithin der Werkstück-Drehachse der Werkstückspindel ein Winkel von vorbestimmter Größe vorhanden ist, läßt sich in Verbindung mit der ohnehin an der Maschine vorhandenen Zustellbewegung der Werkstückspindel in der die Werkstück-Drehachse enthaltenden zweiten Ebene, genauer in Richtung der Werkstückspindel eine hochgenaue Höheneinstellung der Drehmeißelschneide auf die Werkstück-Drehachse der Werkstückspindel erzielen, ohne daß dazu Höhenverlagerungen der Drehmeißelschneide bezüglich der Fast-Tool-Anordnung erforderlich sind. Das Maß der Zustellbewegung der Werkstückspindel in Richtung ihrer Achse und damit der dadurch erzielte Höhenausgleich zwischen der Werkstück-Drehachse der Werkstückspindel und dem Arbeitspunkt der Drehmeißelschneide erfolgt nach Maßgabe der Sinusfunktion des vorbestimmten Winkels.

Im Ergebnis sind mechanische Stellsysteme, wie sie im Stand der Technik vorgesehen sind und die im Gegensatz zur vorliegenden Erfindung ohnehin keine automatische Höhenjustage der Drehmei-ßelschneide während der Bearbeitung ermöglichen, entbehrlich. Hierdurch reduziert sich im Vergleich zum Stand der Technik auch das Gewicht der mittels der Fast-Tool-Anordnung zu bewegenden Massen, nämlich um das Gewicht der im Stand der Technik zwischen dem Drehmeißel und dem Schlitten der Fast-Tool-Anordnung vorgesehenen mechanischen Stellelemente, so daß die Dynamik und Bandbreite der Fast-Tool-Anordnung nicht durch zu hohe bewegte Massen limitiert wird. Dies ermöglicht eine höhere Formtreue der mittels der Fast-Tool-Anordnung gedrehten Flächen und führt nicht zuletzt auch zu kürzeren Bearbeitungszeiten.

Mit der Erfindung wird ferner nicht nur eine komplette Verstellachse eingespart bzw. die Anzahl der notwendigen Bewegungsachsen auf ein Minimum beschränkt, sondern es ist darüber hinaus auch möglich, die Zustellbewegungen von Werkzeug (Fast-Tool-Anordnung) und Werkstück (Werkstückspindel) vorteilhaft aufzuteilen. So kann die Zustellbewegung der Werkstückspindel dazu verwendet werden, die rotationssymmetrischen Anteile einer Linse, d.h. also den sphärischen Anteil der Fläche zu erzeugen, während die nicht-rotationssymmetrischen Anteile der Linse, wie sie z.B. bei torischen Flächen, prismatischen Flächen, atorischen Flächen oder Freiformflächen vorhanden sind, über die Zustellbewegung der Fast-Tool-Anordnung erzeugt werden. Hierdurch können auch Fast-Tool-Anordnungen mit geringerem Hub und damit größerer Steifigkeit (infolge der kürzeren Hebel) verwendet werden, was wiederum der Qualität der erzeugten Flächen zuträglich ist.

Im Hinblick auf die Feinfühligkeit der Höheneinstellung der Drehmeißelschneide bezüglich der Werkstück-Drehachse ist es bevorzugt, wenn die Fast-Tool-Bewegungsebene und die die Werkstück-Drehachse enthaltende zweiten Ebene einen Anstellwinkel einschließen, der zwischen 2° und 10° beträgt.

Wenngleich es insbesondere im Hinblick auf eine möglichst einfache Mathematik bei der Regelung der Bewegungsachsen bevorzugt ist, wenn der Drehmeißel mittels der Fast-Tool-Anordnung lagegeregelt in axialer Richtung zustellbar ist, kann der Grundgedanke der vorliegenden Erfindung, nämlich das winkelmäßige Anstellen der Fast-Tool-Bewegungsebene bezüglich der die Werkstück-Drehachse enthaltenden zweiten Ebene auch an einer Maschine mit einer rotativen Fast-Tool-Anordnung, wie sie etwa aus der WO 99/33611 A1 bekannt ist, realisiert werden. In diesem Fall steht die Fast-Tool-Bewegungsebene senkrecht zur Schwenkachse des rotativen Fast-Tools.

### KURZE BESCHREIBUNG DER ZEICHNUNGEN

Im folgenden wird die Erfindung anhand eines bevorzugten Ausführungsbeispiels unter Bezugnahme auf die beigefügten, teilweise schematischen Zeichnungen näher erläutert. In den Zeichnungen zeigen:
- Fig. 1: eine perspektivische Ansicht einer erfindungsgemäßen Maschine zur Bearbeitung von optischen Werkstücken, namentlich Kunststoff-Brillengläsern, von schräg vorne/oben, die werkzeugmäßig mit einer Fräseinheit und zwei Fast-Tool-Anordnungen ausgestattet ist;
- Fig. 2: eine perspektivische Ansicht der Maschine gemäß Fig. 1 von schräg hinten/oben;
- Fig. 3: eine nach unten abgeschnittene Vorderansicht der Maschine gemäß Fig. 1;
- Fig. 4: eine nach unten abgeschnittene Vorderansicht der Maschine gemäß Fig. 1, die sich von der Darstellung in Fig. 3 dahingehend unterscheidet, daß eine Frässpindel der Fräseinheit teilweise abgeschnitten dargestellt ist, um den Blick auf die dahinter liegende Fast-Tool-Anordnung freizugeben;
- Fig. 5: eine Draufsicht auf die Maschine gemäß Fig. 1 mit Blickrichtung von oben in den Fig. 3 und 4; und
- Fig. 6: schematische Vorderansichten einer Werkstückspindel der Maschine gemäß Fig. 1, an der ein im Querschnitt dargestelltes Brillenglas montiert ist, welches mittels eines Drehmeißels der Fast-Tool-Anordnung bearbeitet wird, wobei im oberen Teil von Fig. 6 eine fehlerhafte Höhenjustage des Drehmeißels bezüglich der Werkstück-Drehachse der Werkstückspindel veranschaulicht ist, während im unteren Teil von Fig. 6 eine korrekte Höhenjustage des Drehmeißels bezüglich der Werkstück-Drehachse gezeigt ist.

### DETAILLIERTE BESCHREIBUNG DES AUSFÜHRUNGSBEISPIELS

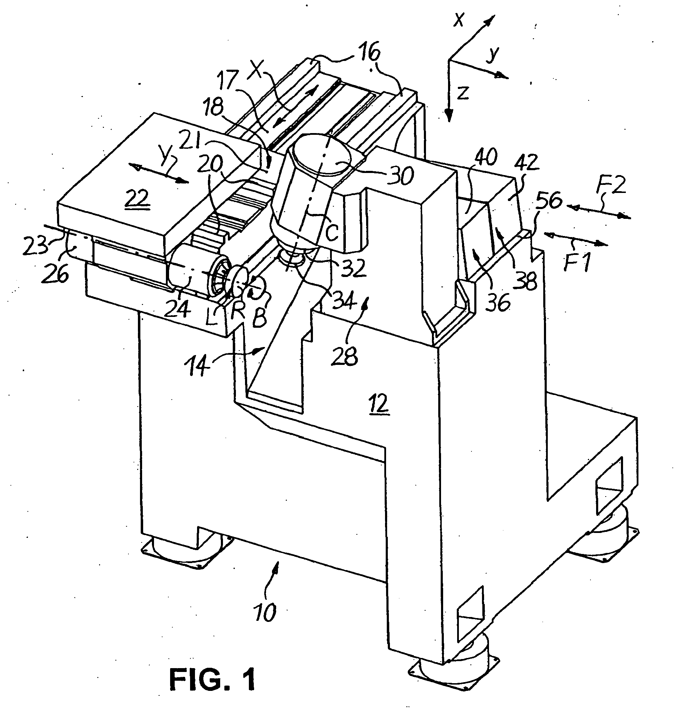

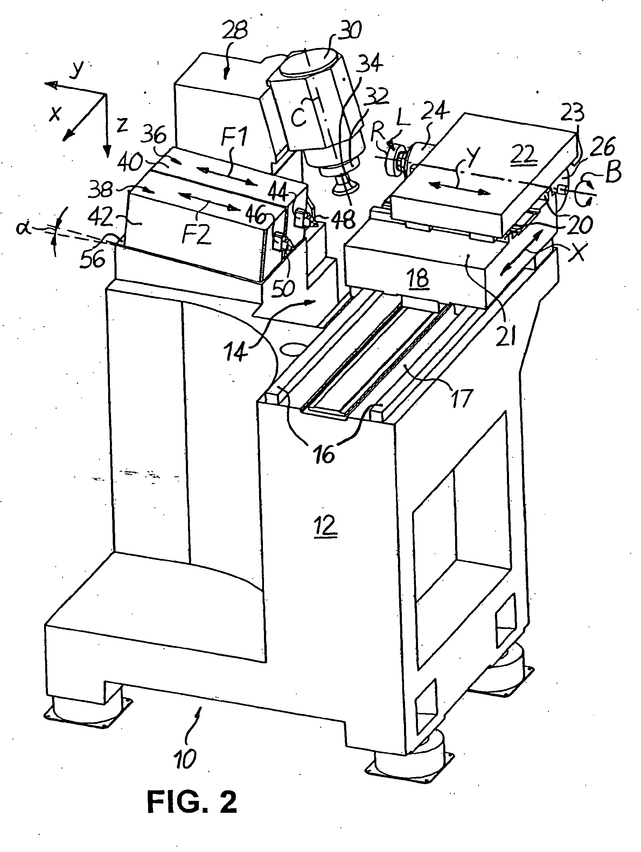

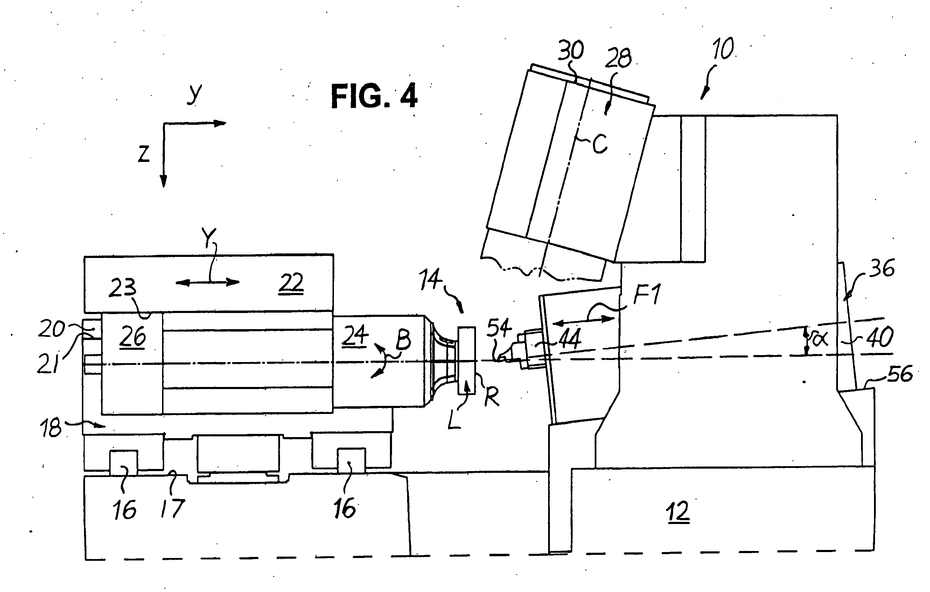

Die Fig. 1 bis 5 zeigen in schematischer Darstellung eine CNCgeregelte Maschine 10 insbesondere zur Flächenbearbeitung von Brillengläsern L aus Kunststoff in einem rechtwinkligen kartesischen Koordinatensystem, in dem die kleinen Buchstaben x, y bzw. z die Breitenrichtung (x), die Längenrichtung (y) und die Höhenrichtung (z) der Maschine 10 bezeichnen.

Gemäß den Fig. 1 bis 5 besitzt die Maschine 10 ein Maschinengestell 12, das einen Bearbeitungsbereich 14 begrenzt. Auf der in Fig. 1 linken Seite des Bearbeitungsbereichs 14 sind zwei Führungsschienen 16, die sich in der (horizontalen) Breitenrichtung x parallel zueinander erstrecken, auf einer in Fig. 1 oberen Montagefläche 17 des Maschinengestells 12 befestigt. Ein X-Schlitten 18, der durch zugeordnete CNC-Antriebs- und Steuerelemente (nicht gezeigt) in beiden Richtungen einer X-Achse CNC-lagegeregelt verstellbar ist, ist verschiebbar auf den Führungsschienen 16 gelagert.

Zwei weitere Führungsschienen 20, die sich in der (gleichfalls horizontalen) Längsrichtung y parallel zueinander und senkrecht zu den Führungsschienen 16 erstrecken, sind auf einer in Fig. 1 oberen Montagefläche 21 des X-Schlittens 18 befestigt. In einer Kreuztischanordnung ist ein Y-Schlitten 22 verschiebbar auf den Führungsschienen 20 gelagert, der durch zugeordnete CNC-Antriebs- und Steuerelemente (ebenfalls nicht gezeigt) in beiden Richtungen einer Y-Achse CNC-lagegeregelt verstellbar ist.

An einer in den Fig. 1 bis 4 unteren Montagefläche 23 des Y-Schlittens 22 ist eine Werkstückspindel 24 befestigt, die mittels eines Elektromotors 26 in der Drehzahl und dem Drehwinkel CNC-geregelt um eine Werkstück-Drehachse B drehend antreibbar ist. Die Werkstück-Drehachse B ist mit der Y-Achse ausgefluchtet. An der Werkstückspindel 24, genauer deren in den Bearbeitungsbereich 14 hineinragenden Ende ist in an sich bekannter Weise das auf einem Blockstück aufgeblockte Brillenglas L für die Bearbeitung insbesondere der Rezeptfläche R des Brillenglases L derart angebracht, daß es gleichachsig mit der Werkstückspindel 24 drehen kann.

Aus der obigen Beschreibung ist soweit ersichtlich, daß die Werkstückspindel 24 mittels der Kreuztischanordnung (X-Schlitten 18, Y-Schlitten 22) CNC-lagegeregelt in einer X-Y-Ebene bewegbar ist, welche die Werkstück-Drehachse B enthält und zu der die Montageflächen 17, 21 und 23 parallel sind, während das Brillenglas L in Drehzahl und Drehwinkel CNC-geregelt um die Werkstück-Drehachse B drehbar ist.

Auf der in Fig. 1 rechten Seite des Bearbeitungsbereichs 14 ist nun zunächst eine Fräseinheit 28 auf dem Maschinengestell 12 montiert, wie sie aus der EP 0 758 571 A1 der Anmelderin in Aufbau und Funktion grundsätzlich bekannt ist. Die Fräseinheit 28 weist eine mittels eines Elektromotors 30 um eine Fräser-Drehachse C drehzahlgeregelt antreibbare Frässpindel 32 auf, an deren in den Bearbeitungsbereich 14 hineinragenden Ende ein Fräswerkzeug 34 montiert ist.

Mittels der Fräseinheit 28 kann an dem Brillenglas L ein Fräsbearbeitungsvorgang ausgeführt werden, der - entsprechend der Lehre der EP 0 758 571 A1 - einen Einstech-Arbeitsgang umfaßt, bei dem das um die Fräser-Drehachse C drehzahlgeregelt rotierende Fräswerkzeug 34 und das drehwinkelgeregelt um die Werkstück-Drehachse B drehende Brillenglas L in wenigstens einer der beiden Achsrichtungen X und Y derart lagegeregelt relativ zueinander bewegt werden, daß die Schneiden des Fräswerkzeugs 34 mindestens im Bereich des Außenrands des Brillenglases L eine ringmuldenförmigen Ausnehmung erzeugen, bevor das Fräswerkzeug 34 in einem formgebenden Arbeitsgang entlang eines spiralförmigen Weges durch Regelung der Bewegungsbahn des Brillenglases L in den X- und Y-Achsen, d.h. in der X-Y-Ebene über das Brillenglas L von außen nach innen geführt wird, um weiteres Material abzutragen. Wahlfreie, wenn auch bevorzugt mitablaufende Arbeitsgänge bei diesem Fräsbearbeitungsvorgang sind die Randbearbeitung und das Facettieren des Brillenglases L. Bei der Randbearbeitung wird mittels des rotierenden Fräswerkzeugs 34 eine Bearbeitung des Brillenglasrohlings z.B. auf die durch die Brillengestellform vorgegebene Umfangskontur vorgenommen, während bei dem Facettieren die obere bzw. innere Umfangskante des Brillenglasrohlings mittels des rotierenden Fräswerkzeugs 34 abgeschrägt wird. Diese Verfahrensschritte sind dem Fachmann hinlänglich bekannt, so daß an dieser Stelle hierauf nicht weiter eingegangen werden soll.

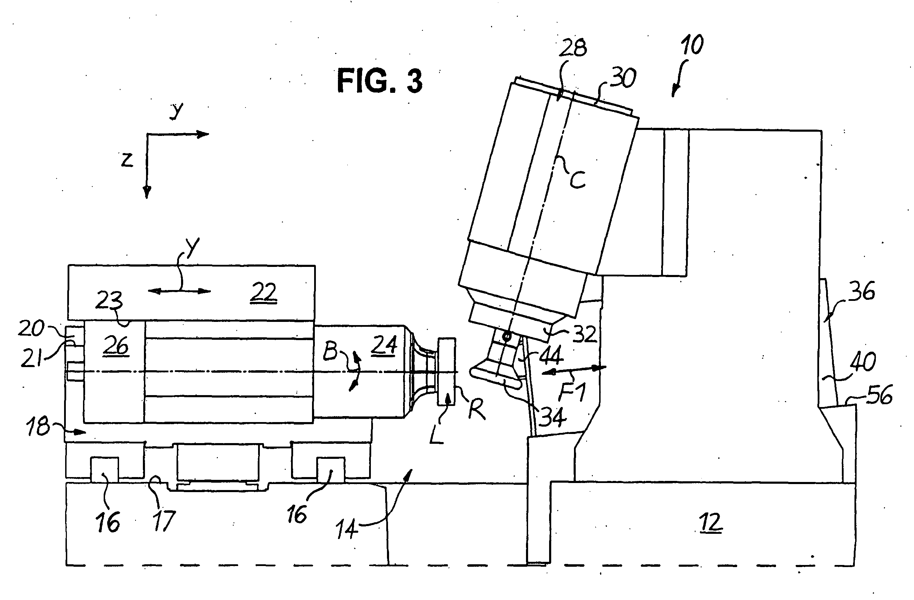

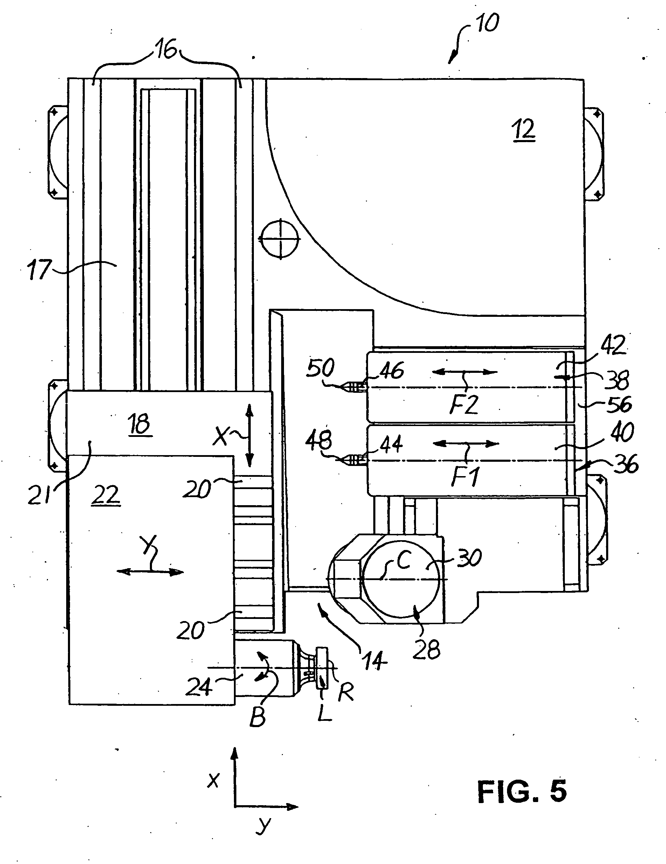

In den Fig. 1, 3 und 4 hinter der Fräseinheit 28 ist/sind wenigstens eine, im dargestellten Ausführungsbeispiel zwei Fast-Tool-Anordnungen 36, 38 in Parallelanordnung vorgesehen (mehr als zwei Fast-Tool-Anordnungen sind grundsätzlich ebenfalls denkbar). Wie etwa aus der WO 02/06005 A1 bekannt ist, weist jede Fast-Tool-Anordnung 36, 38 einen Aktuator 40, 42 und einen jeweils zugeordneten Schlitten 44, 46 (auch "shuttle" genannt) auf. Während der Schlitten 44 der ersten Fast-Tool-Anordnung 36 in beiden Richtungen einer Fast-Tool-Achse F1 vermittels des Aktuators 40 axial bewegbar ist, ist der Schlitten 46 der zweiten Fast-Tool-Anordnung 38 vermittels des Aktuators 42 in beiden Richtungen einer zur ersten Fast-Tool-Achse F1 parallelen zweiten Fast-Tool-Achse F2 axial bewegbar. Hierbei ist die Lage bzw. der Hub der Schlitten 44, 46 mittels CNC unabhängig voneinander regelbar. Wie die Fig. 5 zeigt, verlaufen die Fast-Tool-Achse F1, die Fast-Tool-Achse F2, die Y-Achse und die Werkstück-Drehachse B in der Draufsicht gesehen in derselben Richtung. In der Vorderansicht gemäß den Fig. 3, 4 und 6 gesehen weicht die Richtung der Y-Achse und der Werkstück-Drehachse B einerseits indes von der Richtung der Fast-Tool-Achse F1 und der Fast-Tool-Achse F2 andererseits ab, worauf nachfolgend noch näher eingegangen werden wird.

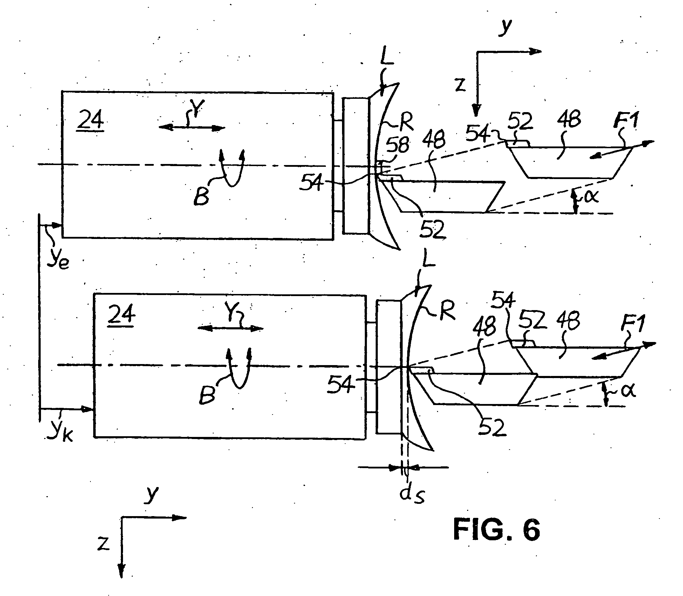

Im dargestellten Ausführungsbeispiel trägt jeder der Schlitten 44, 46 an seinem in den Bearbeitungsbereich 14 hineinragenden Ende einen Drehmeißel 48, 50, der am jeweiligen Schlitten 44, 46 auf hier nicht näher gezeigte Art und Weise vorzugsweise fest (im Gegensatz zu verstellbar) befestigt ist, so daß die Drehmeißel 48, 50 in einer Fast-Tool-Bewegungsebene (X-F1-Ebene bzw. X-F2-Ebene) bewegbar sind. Gemäß insbesondere Fig. 6 ist an dem Drehmeißel 48 ein Schneidplättchen 52 ggf. lösbar oder als Beschichtung angebracht, das eine Schneidkante 54 ausbildet und den jeweiligen Erfordernissen entsprechend, insbesondere spezifisch für den zu bearbeitenden Werkstoff, aus polykristallinem Diamant (PKD), CVD, Naturdiamant oder aber auch Hartmetall mit oder ohne Verschleißschutz-Beschichtung bestehen kann.

Mittels der Fast-Tool-Anordnung(en) 36 (und ggf. 38) kann die durch die Fräseinheit 28 vorbearbeitete Rezeptfläche R des Brillenglases L drehend nachbearbeitet werden, was wiederum unter Regelung der Bewegung des Brillenglases L in der X-Achse und ggf. der Y-Achse, d.h. in der X-Y-Ebene sowie unter Regelung der Bewegung des bearbeitenden Drehmeißels 48 (bzw. 50) in der F1-Achse (bzw. F2-Achse), d.h. in der X-F1-Ebene (bzw. X-F2-Ebene) erfolgt. Hierbei können die Fast-Tool-Anordnungen 36 und 38 derart angesteuert werden, daß sich der nicht an der Drehbearbeitung beteiligte Schlitten zu dem an der Drehbearbeitung beteiligten Schlitten in Gegenrichtung bewegt, so daß die Schlitten quasi gegenläufig bzw. im Gegentakt schwingen, um durch Massenkompensation zu verhindern, daß störende Schwingungen in das Maschinengestell 12 übertragen werden bzw. diese zu verringern, wie es in der WO 02/06005 A1 offenbart wird. Im Ergebnis sind bei der Drehbearbeitung Flächenqualitäten erzielbar, die fast der Flächenqualität entsprechen, die mit herkömmlichen Polierverfahren erzielbar ist.

Eine Besonderheit der vorbeschriebenen Maschine 10 besteht darin, wie weiter oben schon allgemeiner angesprochen wurde, daß die Fast-Tool-Anordnungen 36 und 38 auf einer Montagefläche 56 des Maschinengestells 12 montiert sind, die bezüglich der Montageflächen 17, 21 bzw. 23 für die Kreuztischanordnung (X-Schlitten 18, Y-Schlitten 22) bzw. die Werkstückspindel 24 um einen Winkel α verkippt bzw. angestellt ist, so daß die Fast-Tool-Bewegungsebene (X-F1-Ebene bzw. X-F2-Ebene) bezüglich der die Werkstück-Drehachse B enthaltenden Bewegungsebene (X-Y-Ebene) der Werkstückspindel 24 schräggestellt ist. Dieser Winkel α beträgt im dargestellten Ausführungsbeispiel etwa 5°, kann aber auch etwas mehr oder etwas weniger betragen, beispielsweise im Bereich von 2° bis 10° liegen.

Durch diese Maßnahme hat eine Verstellung des Drehmeißels 48 mittels der Fast-Tool-Anordnung 36 in der F1-Achse bzw. eine Verstellung des Drehmeißels 50 mittels der Fast-Tool-Anordnung 38 in der F2-Achse zur Folge, daß die Bewegung der jeweiligen Schneidkante 54 zwei Bewegungskomponenten erhält, nämlich eine Bewegungskomponente in der Längsrichtung y der Maschine 10 und eine Bewegungskomponente in der Höhenrichtung z der Maschine 10. Letztere kann dafür genutzt werden, den Arbeitspunkt der Schneidkante 54 des jeweiligen Drehmeißels 48, 50 auf die Werkstück-Drehachse B der Werkstückspindel 24 auszurichten, um Höhenfehler bzw. -abweichungen der Schneidkante 54 in Höhenrichtung z zu kompensieren. Ein solches Vorgehen ist in Fig. 6 veranschaulicht.

Im oberen Teil von Fig. 6 ist eine fehlerhafte Höhenjustage des Drehmeißels 48 gezeigt. Obgleich hier eine relative Zustellung von Werkstückspindel 24 und Drehmeißel 48 in der Längsrichtung y derart erfolgt, daß das Brillenglas L am Ende der Drehbearbeitung (links dargestellter Drehmeißel 48) eine Dicke in Längsrichtung y aufweist, die der gewünschten Dicke, d.h. der Soll-Enddicke dₛ des Brillenglases L entspricht, verbleibt ein Flächenfehler in Form eines in Fig. 6 übertrieben groß dargestellten Zapfens 58 auf der Rezeptfläche R. Dieser Flächenfehler ist darauf zurückzuführen, daß der Drehmeißel 48, genauer dessen Schneidkante 54 am Ende der Drehbearbeitung die Werkstück-Drehachse B nicht "trifft", sondern unterhalb der Werkstück-Drehachse B zum Stehen kommt (bei fehlerhafter Axialposition yₑ der Werkstückspindel 24: Werkzeug 48 ist am Ende der Drehbearbeitung zu niedrig). Ein vergleichbarer, kegelförmiger Flächenfehler entsteht (nicht gezeigt), wenn am Ende der Drehbearbeitung die Schneidkante 54 des Drehmeißels 48 oberhalb der Werkstück-Drehachse B zum Stehen kommt (Werkzeug zu hoch).

Im unteren Teil von Fig. 6 ist nun eine korrekte Höhenjustage des Drehmeißels 48 bezüglich der Werkstück-Drehachse B dargestellt, bei der auf der Rezeptfläche R des Brillenglases L kein zentraler Flächenfehler verbleibt. Hierfür wird wie folgt vorgegangen: Zunächst wird - bei bekannter Lage der Schneidkante 54 des Drehmeißels 48 im Koordinatensystem der Maschine 10 und bekanntem Anstellwinkel α der Fast-Tool-Achse F1 - eine Axialposition yₖ der Werkstückspindel 24 in Längsrichtung y berechnet, bei der der Arbeitspunkt der Schneidkante 54 des Drehmeißels 48 bei Soll-Enddicke dₛ des zu bearbeitenden Brillenglases L in der die Werkstück-Drehachse B enthaltenden X-Y-Ebene zum Liegen kommt, d.h. die Werkstück-Drehachse B "trifft". Sodann wird die Werkstückspindel 24 durch lagegeregeltes axiales Verfahren bzw. Zustellen in der Y-Achse in die berechnete Axialposition yₖ gebracht, worauf ein axiales Festsetzen oder Halten der Werkstückspindel 24 in der berechneten Axialposition yₖ erfolgt. Nun kann das drehend angetriebene Brillenglas L unter lagegeregeltem Quervorschub der Werkstückspindel 24 in der X-Achse und lagegeregeltem (F1-Achse) Zustellen des Drehmeißels 48 in der Fast-Tool-Bewegungsebene, d.h. der X-F1-Ebene bearbeitet werden bis die Soll-Enddicke dₛ am bearbeiteten Brillenglas L erzielt ist. Am Ende der Drehbearbeitung "trifft" die Schneidkante 54 des Drehmeißels 48 die Werkstück-Drehachse B jetzt automatisch.

Alternativ dazu kann, wie eingangs bereits erwähnt, so vorgegangen werden, daß die Werkstückspindel 24 in der Y-Achse nicht festgehalten wird, sondern neben der Bewegung der Fast-Tool-Anordnung 36 in der F1-Achse auch eine geometrieerzeugende Bewegung der Werkstückspindel 24 in der Y-Achse erfolgt, genauer gesagt die Geometrieerzeugung auf die Y-Achse und die F1-Achse derart aufgeteilt wird, daß die Y-Achse für den langsameren Bewegungsanteil zuständig ist, während die F1-Achse den schnelleren Bewegungsanteil übernimmt. Der Vorteil einer solchen Vorgehensweise ist insbesondere der, daß Fast-Tool-Anordnungen 36, 38 mit geringerem Hub und damit größerer Steifigkeit verwendet und außerdem höhere Bearbeitungsgeschwindigkeiten erzielt werden können.

Ein solches Vorgehen umfaßt dann die folgenden Schritte: Zunächst wird eine sphärische oder auch torische Flächengeometrie berechnet, die der Soll-Flächengeometrie der am Brillenglas L zu bearbeitenden Rezeptfläche R am besten entspricht ("best fit sphere" bzw. "best fit toric surface"). Ferner wird, wie bei dem vorhergehend beschriebenen Vorgehen auch, eine Axialposition yₖ der Werkstückspindel 24 berechnet, bei der der Arbeitspunkt der Schneidkante 54 des Drehmeißels 48 bei Soll-Enddicke dₛ des zu bearbeitenden Brillenglases L in der die Werkstück-Drehachse B enthaltenden X-Y-Ebene zum Liegen kommt. Sodann wird das drehend angetriebene Brillenglas L bearbeitet, und zwar unter lagegeregeltem Quervorschub der Werkstückspindel 24 in der X-Achse, lagegeregeltem Zustellen der Werkstückspindel 24 in der Y-Achse entlang einer Bewegungsbahn, die der berechneten sphärischen oder torischen "best fit" Flächengeometrie entspricht, bis die Werkstückspindel 24 die vorher berechnete Axialposition yₖ erreicht hat sowie gleichzeitigem lagegeregelten Zustellen des Drehmeißels 48 in der F1-Achse bzw. der Fast-Tool-Bewegungsebene (X-F1-Ebene) entsprechend Abweichungen der Soll-Flächengeometrie der zu bearbeitenden Rezeptfläche R von der berechneten sphärischen oder torischen "best fit" Flächengeometrie bis die Soll-Enddicke dₛ an dem bearbeiteten Brillenglas L erzielt ist.

Wenngleich im beschriebenen Ausführungsbeispiel die X-Y-Ebene horizontal verläuft, während die X-F1-Ebene bzw. die X-F2-Ebene aus der Horizontalen um den Winkel α herausgekippt ist, können die Verhältnisse grundsätzlich auch umgekehrt getroffen werden, mit einer horizontal verlaufenden X-F1-Ebene bzw. X-F2-Ebene und einer bezüglich der Horizonalen in einem Winkel angestellten X-Y-Ebene. Ebenfalls ist eine Ausgestaltung denkbar, bei der sowohl die X-Y-Ebene als auch die X-F1-Ebene bzw. X-F2-Ebene aus der Horizontalen herausgekippt sind, dann allerdings um verschiedene Winkelbeträge.

Es wird eine Maschine zur Bearbeitung von optischen Werkstücken, insbesondere von Kunststoff-Brillengläsern offenbart, die eine Werkstückspindel hat, mittels der das Werkstück um eine Werkstück-Drehachse drehend antreibbar ist, und eine Fast-Tool-Anordnung aufweist, mittels der ein Drehmeißel in einer Fast-Tool-Bewegungsebene bewegbar ist, wobei die Werkstückspindel und die Fast-Tool-Anordnung zudem in einer Ebene, welche die Werkstück-Drehachse enthält, relativ zueinander bewegbar sind. Erfindungsgemäß ist die Fast-Tool-Bewegungsebene bezüglich der die Werkstück-Drehachse enthaltenden Ebene schräggestellt. Im Ergebnis wird eine Maschine bereitgestellt, bei der der Arbeitspunkt der Schneidkante des Drehmeißels auf besonders einfache Weise hochgenau auf die Rotationsachse der Werkstückspindel ausgerichtet werden kann.

### BEZUGSZEICHENLISTE

- 10: Maschine
- 12: Maschinengestell
- 14: Bearbeitungsbereich
- 16: Führungsschiene
- 17: Montagefläche
- 18: X-Schlitten
- 20: Führungsschiene
- 21: Montagefläche
- 22: Y-Schlitten
- 23: Montagefläche
- 24: Werkstückspindel
- 26: Elektromotor
- 28: Fräseinheit
- 30: Elektromotor
- 32: Frässpindel
- 34: Fräswerkzeug
- 36: Fast-Tool-Anordnung
- 38: Fast-Tool-Anordnung
- 40: Aktuator
- 42: Aktuator
- 44: Schlitten
- 46: Schlitten
- 48: Drehmeißel
- 50: Drehmeißel
- 52: Schneidplättchen
- 54: Schneidkante
- 56: Montagefläche
- 58: Zapfen

- α: Anstellwinkel

- dₛ: Soll-Enddicke des Werkstücks / Brillenglases
- x: Breitenrichtung
- y: Längsrichtung
- yₑ: fehlerhafte Axialposition der Werkstückspindel
- yₖ: korrekte Axialposition der Werkstückspindel
- z: Höhenrichtung

- B: Werkstück-Drehachse
- C: Fräser-Drehachse
- F1: Linearachse 1. Fast-Tool
- F2: Linearachse 2. Fast-Tool
- L: Werkstück / Brillenglas
- R: Rezeptfläche
- X: Linearachse Werkstück
- Y: Linearachse Werkstück

## Patentansprüche

1. Maschine (10) zur Bearbeitung von optischen Werkstücken (L), namentlich Kunststoff-Brillengläsern, die an einer Rezeptfläche (R) zu bearbeiten sind, mit
einer Werkstückspindel (24), mittels der das Werkstück (L) um eine Werkstück-Drehachse (B) drehend antreibbar ist, die durch die Rezeptfläche (R) verläuft, und
einer Fast-Tool-Anordnung (36), mittels der ein Drehmeißel (48) in beiden Richtungen einer Fast-Tool-Achse (F1) auf die Rezeptfläche (R) zu und von dieser weg lagegeregelt bewegbar ist, um den Drehmeißel (48) bei der Bearbeitung der Rezeptfläche (R) zuzustellen,
wobei die Werkstückspindel (24) und die Fast-Tool-Anordnung (36) zudem in einer weiteren Richtung (x), die quer zur Fast-Tool-Achse (F1) verläuft, relativ zueinander bewegbar sind, um bei der Bearbeitung der Rezeptfläche (R) zwischen dem Werkstück (L) und dem Drehmeißel (48) einen Vorschub zu erzeugen,
**dadurch gekennzeichnet, dass** die Werkstückspindel (24) in beiden Richtungen einer Linearachse (Y), die mit der Werkstück-Drehachse (B) ausgefluchtet ist, auf den Drehmeißel (48) zu und von diesem weg lagegeregelt zustellbar ist und
die weitere Richtung (x) und die Fast-Tool-Achse (F1) eine Fast-Tool-Bewegungsebene (X-F1-Ebene) bilden, während die weitere Richtung (x) und die Linearachse (Y) eine zweite Ebene (X-Y-Ebene) bilden, die die Werkstück-Drehachse (B) enthält,
wobei die Fast-Tool-Bewegungsebene (X-F1-Ebene) bezüglich der zweiten Ebene (X-Y-Ebene) um einen Austellwinkel schräggestellt ist.

2. Maschine (10) nach Anspruch 1, **dadurch gekennzeichnet, dass** die Fast-Tool-Bewegungsebene (X-F1-Ebene) und die die Werkstück-Drehachse (B) enthaltende zweite Ebene (X-Y-Ebene) einen Anstellwinkel (α) einschließen, der zwischen 2° und 10° beträgt.

3. Maschine (10) nach Anspruch 1 oder 2, **dadurch gekennzeichnet, dass** der Drehmeißel (48) mittels der Fast-Tool-Anordnung (36) lagegeregelt (F1-Achse) in axialer Richtung zustellbar ist.

4. Verfahren zur Bearbeitung von optischen Werkstücken (L), namentlich Kunststoff-Brillengläsern, unter Verwendung einer Maschine (10) nach einem der vorhergehenden Ansprüche, mit den folgenden Schritten:
(i) Berechnen einer Axialposition (yₖ) der Werkstückspindel (24), bei der der Arbeitspunkt einer Schneidkante (54) des Drehmeißels (48) bei Soll-Enddicke (dₛ) des zu bearbeitenden Werkstücks (L) in der die Werkstück-Drehachse (B) enthaltenden zweiten Ebene (X-Y-Ebene) zum Liegen kommt,
(ii) lagegeregeltes (Y-Achse) axiales Zustellen der Werkstückspindel (24) in die berechnete Axialposition (yₖ),
(iii) axiales Festsetzen oder Halten der Werkstückspindel (24) in der berechneten Axialposition (yₖ) und
(iv) Bearbeiten des drehend angetriebenen Werkstücks (L) unter lagegeregeltem (X-Achse) Quervorschub der Werkstückspindel (24) und lagegeregeltem (F1-Achse) Zustellen des Drehmeißels (48) in der Fast-Tool-Bewegungsebene (X-F1-Ebene) bis die Soll-Enddicke (dₛ) am bearbeiteten Werkstück (L) erzielt ist.

5. Verfahren zur Bearbeitung von optischen Werkstücken (L), namentlich Kunststoff-Brillengläsern, unter Verwendung einer Maschine (10) nach einem der vorhergehenden Ansprüche, mit den folgenden Schritten:
(i) Berechnen einer sphärischen oder torischen Flächengeometrie, die der Soll-Flächengeometrie der am Werkstück (L) zu bearbeitenden Fläche (R) am besten entspricht,
(ii) Berechnen einer Axialposition (yₖ) der Werkstückspindel (24), bei der der Arbeitspunkt einer Schneidkante (54) des Drehmeißels (48) bei Soll-Enddicke (dₛ) des zu bearbeitenden Werkstücks (L) in der die Werkstück-Drehachse (B) enthaltenden zweiten Ebene (X-Y-Ebene) zum Liegen kommt,
(iii) Bearbeiten des drehend angetriebenen Werkstücks (L) unter lagegeregeltem (X-Achse) Quervorschub der Werkstückspindel (24), lagegeregeltem (Y-Achse) Zustellen der Werkstückspindel (24) entlang einer Bewegungsbahn, die der berechneten sphärischen oder torischen Flächengeometrie entspricht, bis die Werkstückspindel (24) die berechnete Axialposition (yₖ) erreicht hat sowie gleichzeitigem lagegeregelten (F1-Achse) Zustellen des Drehmeißels (48) in der Fast-Tool-Bewegungsebene (X-F1-Ebene) entsprechend Abweichungen der Soll-Flächengeometrie der zu bearbeitenden Fläche (R) von der berechneten sphärischen oder torischen Flächengeometrie bis die Soll-Enddicke (dₛ) am bearbeiteten Werkstück (L) erzielt ist.

## Claims

1. Machine (10) for machining optical workpieces (L), by name plastic spectacle lenses, that are to be machined on a prescription surface (R), comprising
a workpiece spindle (24), by means of which the workpiece (L) can be driven in rotation about a workpiece rotation axis (B) that runs through the prescription surface (R), and
a fast tool arrangement (36), by means of which a turning tool (48) can be moved in a positionally controlled manner in both directions of a fast tool axis (F1) towards and away from the prescription surface (R) to adjust the turning tool (48) during the machining of the prescription surface (R),
wherein the workpiece spindle (24) and the fast tool arrangement (36) can moreover be moved relative to one another in a further direction (x) that runs transverse with respect to the fast tool axis (F1) to generate an advance between the workpiece (L) and the turning tool (48) during the machining of the prescription surface (R),
**characterized in that** the workpiece spindle (24) can be adjusted in a positionally controlled manner in both directions of a linear axis (Y) towards and away from the turning tool (48), the linear axis (Y) being aligned with the workpiece rotation axis (B), and
that the further direction (x) and the fast tool axis (F1) form a fast tool movement plane (X-F1 plane), whereas the further direction (x) and the linear axis (Y) form a second plane (X-Y plane) that contains the workpiece rotation axis (B),
wherein the fast tool movement plane (X-F1 plane) is positioned obliquely by a work angle α with respect to the second plane (X-Y plane).

2. Machine (10) according to Claim 1, **characterized in that** the fast tool movement plane (X-F1 plane) and the second plane (X-Y plane) containing the workpiece rotation axis (B) enclose a work angle (α) of between 2° and 10°.

3. Machine (10) according to Claim 1 or 2, **characterized in that** the turning tool (48) can be adjusted in the axial direction in a positionally controlled manner (F1 axis) by means of the fast tool arrangement (36).

4. Method for machining optical workpieces (L), by name plastic spectacle lenses, using a machine (10) according to any of the preceding claims, said method comprising the following steps:
(i) calculation of an axial position (yₖ) of the workpiece spindle (24) at which the working point of a cutting edge (54) of the turning tool (48), at a desired final thickness (dₛ) of the workpiece (L) to be machined, comes to lie in the second plane (X-Y plane) containing the workpiece rotation axis (B),
(ii) positionally controlled (Y axis) axial adjustment of the workpiece spindle (24) into the calculated axial position (yₖ),
(iii) axial fixing or holding of the workpiece spindle (24) in the calculated axial position (yₖ), and
(iv) machining of the rotationally driven workpiece (L) under positionally controlled (X axis) transverse advance of the workpiece spindle (24) and positionally controlled (F1 axis) adjustment of the turning tool (48) in the fast tool movement plane (X-F1 plane) until the desired final thickness (dₛ) on the machined workpiece (L) is achieved.

5. Method for machining optical workpieces (L), by name plastic spectacle lenses, using a machine (10) according to any of the preceding claims, said method comprising the following steps:
(i) calculation of a spherical or toric surface geometry which best corresponds to the desired surface geometry of the surface (R) to be machined on the workpiece (L).
(ii) calculation of an axial position (yₖ) of the workpiece spindle (24) at which the working point of a cutting edge (54) of the turning tool (48), at a desired final thickness (dₛ) of the workpiece (L) to be machined, comes to lie in the second plane (X-Y plane) containing the workpiece rotation axis (B),
(iii) machining of the rotationally driven workpiece (L) under positionally controlled (X axis) transverse advance of the workpiece spindle (24), positionally controlled (Y axis) adjustment of the workpiece spindle (24) along a movement path which corresponds to the calculated spherical or toric surface geometry until the workpiece spindle (24) has reached the calculated axial position (yₖ), and simultaneous positionally controlled (F1 axis) adjustment of the turning tool (48) in the fast tool movement plane (X-F1 plane), according to differences between the desired surface geometry of the surface (R) to be machined and the calculated spherical or toric surface geometry, until the desired final thickness (dₛ) on the machined workpiece (L) is achieved.

## Revendications

1. Machine (10) pour l'usinage de pièces à oeuvrer optiques (L), à savoir des verres de lunettes en matière plastique, qu'il s'agit d'usiner au niveau d'une surface définie par ordonnance (R), comprenant
une broche pour pièces à oeuvrer (24), au moyen de laquelle la pièce à oeuvrer (L) peut être entraînée en rotation autour d'un axe de rotation de pièce (B) qui s'étend à travers la surface définie par ordonnance (R), et
un agencement à outil rapide (36), au moyen duquel un burin rotatif (48) est déplaçable dans les deux directions d'un axe d'outil rapide (F1) de manière régulée quant à sa position en rapprochement et en éloignement de la surface définie par ordonnance (R), afin de d'approcher le burin rotatif (48) lors de l'usinage de la surface définie par ordonnance (R),
dans laquelle la broche pour pièces à oeuvrer (24) et l'agencement à outil rapide (36) sont déplaçables l'une par rapport à l'autre dans une autre direction (x) qui s'étend perpendiculairement à l'axe d'outil rapide (F1) afin d'engendrer un mouvement d'avance entre la pièce à oeuvrer (L) et le burin rotatif (48) lors de l'usinage de la surface définie par ordonnance (R),
**caractérisée en ce que** la broche pour pièce à oeuvrer (24) est susceptible d'être approchée du burin rotatif (48) et éloignée de celui-ci de façon régulée quant à sa position dans les deux directions d'un axe linéaire (Y) qui est en alignement avec l'axe de rotation (B) de la pièce oeuvrer, et
l'autre direction (x) et l'axe d'outil rapide (F1) forment un plan de déplacement d'outil rapide (plan X - FI), alors que l'autre direction (X) et l'axe linéaire (Y) forment un second plan (plan X-Y) qui contient l'axe de rotation de la pièce à oeuvrer (B),
dans laquelle le plan de déplacement d'outil rapide (plan X - FI) est disposé en oblique sous un angle d'approche (α) par rapport au second plan (X - Y).

2. Machine (10) selon la revendication 1, **caractérisée en ce que** le plan de déplacement d'outil rapide (plan X - FI) et le second plan (plan X - Y) qui contient l'axe de rotation de la pièce oeuvrer (B) définissent un angle d'approche (α) qui est compris entre 2° et 10°.

3. Machine (10) selon la revendication 1 ou 2, **caractérisée en ce que** le burin rotatif (48) est susceptible d'être approche en direction axiale de façon régulée quant à sa position (axe F1) au moyen de l'agencement à outil rapide (36).

4. Procédé pour l'usinage de pièces à oeuvrer optiques (L), à savoir des verres de lunettes en matière plastique, en utilisant une machine (10) selon l'une des revendications précédentes, comprenant les étapes suivantes :
(i) on calcule une position axiale (yₖ) de la broche pour pièce à oeuvrer (24) pour laquelle le point d'usinage d'une arête de coupe (54) du burin rotatif (48) vient se placer dans le second plan (plan X-Y) qui contient l'axe de rotation de la pièce oeuvrer (B) lorsque l'épaisseur de la pièce à oeuvrer à usiner (L) atteint une épaisseur finale de consigne (dₛ),
(ii) on approche axialement et de manière régulée en position (axe Y) la broche pour pièce à oeuvrer (24) jusque dans la position axiale calculée (yₖ),
(iii) on immobilise axialement ou on maintient la broche pour pièce à oeuvrer (24) dans la position axiale calculée (yₖ), et
(iv) on usine la pièce à oeuvrer (L) entraînée en rotation avec une avance transversale régulée en position (axe X) de la broche pour pièce à oeuvrer (24), et une approche régulée en position (axe F1) du burin rotatif (48) dans le plan de déplacement d'outil rapide (plan X-F1) jusqu'à atteindre l'épaisseur finale de consigne (dₛ) sur la pièce oeuvrer (L) qu'il s'agit d'usiner.

5. Procédé pour l'usinage de pièces à oeuvrer optiques (L), à savoir des verres de lunettes en matière plastique, en utilisant une machine (10) selon l'une des revendications précédentes, comprenant les étapes suivantes :
(i) on calcule une géométrie de surface sphérique ou torique dans laquelle la géométrie de surface de consigne correspond au mieux à la surface (R) qu'il s'agit d'usiner sur la pièce oeuvrer (L),
(ii) on calcule une position axiale (yₖ) de la broche pour pièce à oeuvrer (24), dans laquelle le point de travail d'une arête de coupe (54) du burin rotatif (48) vient se placer dans le second plan (plan X-Y) qui contient l'axe de rotation de la pièce oeuvrer (B) lorsque l'épaisseur de la pièce à oeuvrer (L) qu'il s'agit d'usiner a atteint l'épaisseur finale de consigne (dₛ),
(iii) on usine la pièce oeuvrer (L) entraînée en rotation avec avancement transversal, régulé en position (axe X), de la broche pour pièce à oeuvrer (24) et avec approche régulée en position (axe Y) de la broche pour pièce oeuvrer (24) le long d'une trajectoire de déplacement qui correspond à la géométrie de surface sphérique ou toroïdale calculée, jusqu'à ce que la broche pour pièce à oeuvrer (24) atteigne la position axiale calculée (yₖ), et avec approche simultanée et régulée en position (axe F1) du burin rotatif (48) dans le plan de déplacement d'outil rapide (plan X-F1) selon les écarts de la géométrie de surface de consigne de la surface à usiner (R) vis-à-vis de la géométrie de surface sphérique ou toroïdale calculée jusqu'à atteindre l'épaisseur finale de consigne (dₛ) sur la pièce à oeuvrer (L).
